# EUROPEAN PATENT SPECIFICATION

(11) **EP 4 267 410 B1**
(45) Date of publication and mention of the grant of the patent: **28.01.2026**
(21) Application number: 21912262.9
(22) Date of filing: 09.12.2021
(51) Int. Cl.: B60C 7/14, B60C 7/10, B29D 30/02

(54) **TIRE WITH BAND LAYER**
REIFEN MIT GÜRTELLAGE
PNEU COMPORTANT UNE COUCHE DE BANDE

(30) Priority: 24.12.2020 US 202063130452 P
(43) Date of publication of application: 01.11.2023
(73) Proprietor: Bridgestone Americas Tire Operations, LLC, Nashville, TN 37201 (US)
(72) Inventor: GRIEBEL, Jared J., Orange Village, Ohio 44022 (US); RIMAI, Benjamin E., Copley, Ohio 44321 (US); PLOTNER, Bradley S., Canton, Ohio 44708 (US); NELSON, Brandon P., Stow, Ohio 44224 (US)
(74) Representative: Marks & Clerk LLP
(86) International application number: PCT/US2021/072830
(87) International publication number: WO 2022/140730

(56) References cited:
- WO-A1-2020/142665
- WO-A1-2022/039892
- JP-B2- 4 266 874
- KR-B1- 101 699 843
- US-A- 2 896 687
- US-A- 2 982 328
- US-A- 6 142 203
- US-A1- 2010 307 653
- US-A1- 2019 001 749
- US-A1- 2019 143 619

## Description

### FIELD OF INVENTION

The present disclosure relates to a tire, and a method of making the same. More particularly, the present disclosure relates to a tire with a band layer attached to a tread rubber layer, and a method of making the same.

### BACKGROUND

Various tire constructions have been developed which enable a tire to run in an uninflated or underinflated condition. Non-pneumatic tires do not require inflation, while "run flat tires" may continue to operate after receiving a puncture and a complete or partial loss of pressurized air, for extended periods of time and at relatively high speeds. Non-pneumatic tires may include a plurality of spokes, a webbing, or other support structure that connects a lower ring to an upper ring. In some non-pneumatic tires, a circumferential tread may be wrapped about the upper ring of the tire.

The circumferential tread of a tire may contain a shear element having an elastic region disposed between upper and lower inelastic regions. The shear element may also be referred to as a shear band, a tread band, or a thin annular high strength band element. When used in a pneumatic tire, the shear element acts as a tension member when the tire is pressurized. When used in a non-pneumatic tire, or a pneumatic tire in an unpressurized or partially pressurized state, the shear element acts as a structural compression member. Document WO2022/039892A1 discloses a non-pneumatic tire includes an inner ring having an axis of rotation and an outer ring coaxial with the inner ring. The non-pneumatic tire further includes support structure extending from the inner ring to the outer ring and a circumferential tread extending about the outer ring. The circumferential tread includes a band layer constructed of a single material and a tread rubber layer directly attached to the band layer. The band layer has a first face and a second face opposite the first face, and a first axial edge and a second axial edge, the first and second axial edges spacing the first face from the second face. At least one of the first edge and the second edge has a geometry that provides the band layer with a nonrectangular cross section. Another non-pneumatic tire is known from US2019143619A1.

### SUMMARY OF THE INVENTION

In one aspect of the present invention, a non-pneumatic tire is provided as claimed in claim 1.

In another aspect of the present invention, a method of making a non-pneumatic tire is provided as claimed in claim 10.

### BRIEF DESCRIPTION OF DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a front view of an undeformed non-pneumatic tire;
**Figure 2** is a front view of the non-pneumatic tire of **Figure 1** being deformed when subjected to a load;
**Figure 3** is a schematic drawing illustrating a partial cross-section along line **3-3** of the non-pneumatic tire of **Figure 1**;
**Figure 4A** is a front plan view of one embodiment of a sheet of metal or high strength polymeric material;
**Figure 4B** is a perspective view of one embodiment of a seamed cylinder formed from the sheet of **Figure 4A**;
**Figure 5A** is a front plan view of an alternative embodiment of a sheet of metal or high strength polymeric material;
**Figure 5B** is a perspective view of one embodiment of a cylinder formed from the sheet of **Figure 5A**;
**Figure 6A** is a front plan view of another alternative embodiment of a sheet of metal or high strength polymeric material;
**Figure 6B** is a perspective view of one embodiment of a cylinder formed from the sheet of **Figure 6A**;
**Figure 7A** is a cross-sectional view of one embodiment of a reverse flow forming system for forming a cylinder;
**Figure 7B** is a front view of the reverse flow forming system of **Figure 7A**;
**Figure 8A** is a perspective view of the cylinder of **Figure 6B** with arrows showing one embodiment of a direction of travel during a flow forming process; and
**Figure 8B** is a perspective view of the cylinder of **Figure 6B** with arrows showing an alternative embodiment of a direction of travel during a flow forming process.

### DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Circumferential" and "circumferentially" refer to a direction extending along the perimeter of the surface of the tread perpendicular to the axial direction.

"Radial" and "radially" refer to a direction perpendicular to the axis of rotation of a tire.

"Tread" as used herein, refers to that portion of the tire that comes into contact with the road or ground under normal inflation and normal load.

While similar terms used in the following descriptions describe common tire components, it should be understood that because the terms carry slightly different connotations, one of ordinary skill in the art would not consider any one of the following terms to be purely interchangeable with another term used to describe a common tire component.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the side of the tire. Thus, when relative directional terms such as "inner" and "outer" are used in connection with an element, the "inner" element is spaced closer to the equatorial plane of the tire than the "outer" element.

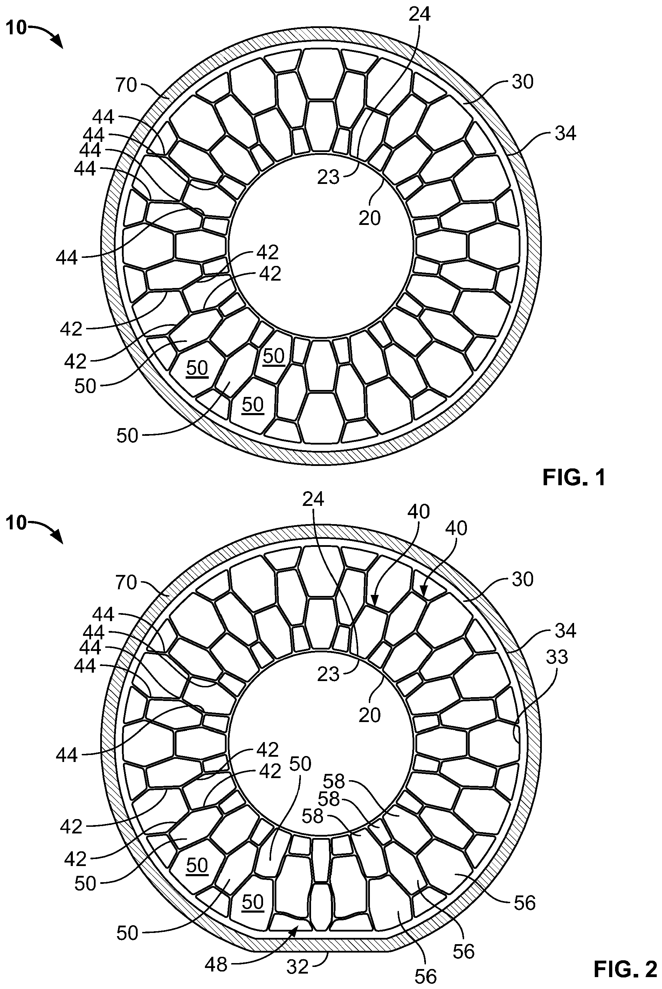

**Figures 1** and **2** illustrate one embodiment of a non-pneumatic tire **10.** The non-pneumatic tire **10** is merely an exemplary illustration and is not intended to be limiting. In the illustrated embodiment, the non-pneumatic tire **10** includes a generally annular lower ring **20** that engages a rim (not shown) to which the tire **10** is mounted. The generally annular lower ring **20** has an internal surface **23** and an external surface **24** and can be made of an elastomeric material or metal.

The non-pneumatic tire **10** further includes a generally annular upper ring **30** surrounding an interconnected web 40, which is a support structure connected to the generally annular lower ring **20.** In alternative embodiments, a plurality of spokes or other support structure connects the lower ring to the upper ring. The upper ring **30** can be configured to deform in an area **48** around and including a footprint region **32** (see **Figure 2**), which decreases vibration and increases ride comfort.

In one embodiment, the generally annular lower ring **20** and the generally annular upper ring **30** are made of the same material as interconnected web **40.** In an alternative embodiment, at least one of the generally annular lower ring, the generally annular upper ring, and the interconnected web are made of a different material. As shown in **Figure 1**, the generally annular upper ring **30** can have a radially external surface **34** to which a tread carrying layer **70** is attached. Attachment can be done adhesively or using other methods commonly available in the art.

In the illustrated embodiment, the interconnected web **40** has at least two radially adjacent layers **56**, **58** of web elements **42** that define a plurality of generally polygonal openings **50.** In other embodiments (not shown), other web configurations may be employed. In another embodiment (not shown), spokes or other support structure may be employed instead of a web.

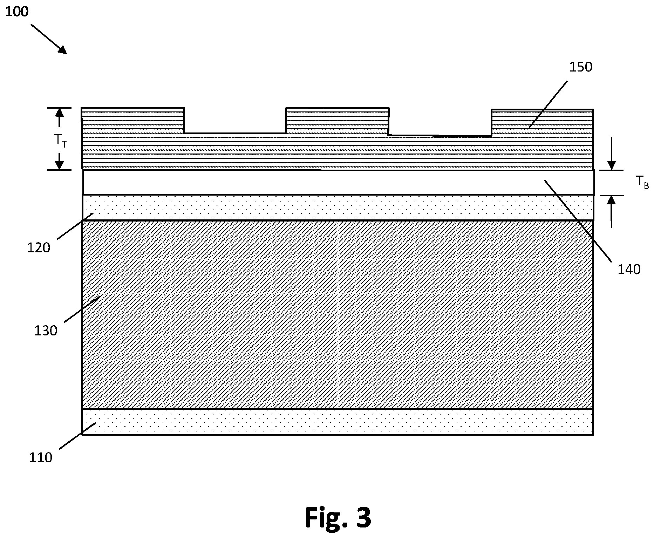

**Figure 3** is a schematic drawing illustrating a partial cross-section of one embodiment of a non-pneumatic tire **100.** In this embodiment, the non-pneumatic tire **100** includes a tire structure having a lower ring **110**, an upper ring **120**, and a support structure **130** extending from the lower ring to the upper ring. In one embodiment, the support structure **130** is a webbing, such as the webbing shown in **Figures 1** and **2****.** In an alternative embodiment, the support structure includes a plurality of spokes. It should be understood, however, that any support structure may be employed.

The non-pneumatic tire **100** includes a circumferential tread having the same width as the upper ring **120.** The circumferential tread includes a band layer **140** constructed of a single material. A tread rubber layer **150** is directly attached to the band layer **140.** In an alternative embodiment (not shown), the circumferential tread is wider than the upper ring. In another alternative embodiment (not shown), the upper ring is wider than the circumferential tread.

The illustrated structure carries an applied load by resisting bending about its neutral axis. Bending of the band layer **140** assists in carrying a load on the non-pneumatic tire **100.** If metal or other lossless materials are used for the band layer **140**, rolling resistance and heat generation of the assembly can be reduced. This is a departure from prior polymeric shear layers having plies of steel cords. Such polymeric shear layers provide load carrying capability, at the expense of high rolling resistance and heat generation.

The single material of the band layer **140** may be a composite, or blend of multiple materials, but the band layer **140** is not formed of distinct layers of materials. In one embodiment, the band layer **140** is constructed of steel. In one specific embodiment, the band layer **140** is constructed of ultra high strength steel. Other exemplary materials include, without limitation, rubber, other metals such as aluminum, brass, copper, and stainless steel, or polymeric materials including polyurethane, polyester, and polyvinyl chloride (PVC).

Favorable performance may be achieved with a band layer constructed of a material having a high ultimate tensile strength and a surface finish with low surface roughness. In one embodiment, the band layer is constructed of a material having an ultimate tensile strength of at least 60,000 pounds of force per square inch (*i.e.,* 60 ksi or 410 MPa). In another embodiment, the band layer is constructed of a material having an ultimate tensile strength of at least 120,000 pounds of force per square inch (*i.e.,* 120 ksi or 830 MPa). In yet another embodiment, the band layer is constructed of a material having an ultimate tensile strength of at least 200,000 pounds of force per square inch (*i.e.,* 200 ksi or 1400 MPa). A band layer constructed of a material having a high ultimate tensile strength has a better fatigue life.

Additionally, in one embodiment, the band layer is constructed of a material having an average surface roughness of less than 1000 micro inches (*i.e.,* 25 microns). In another embodiment, the band layer is constructed of a material having an average surface roughness of less than 64 micro inches (*i.e.,* 1.6 microns). In yet another embodiment, the band layer is constructed of a material having an average surface roughness of less than 32 micro inches (*i.e.,* 0.8 microns). While a rougher finish may be better for adhesion, it has been found that a finer finish is better for fatigue life.

The ultimate tensile strengths and average surface roughnesses identified above may be found in high strength steel that has been prepared through a shot peening or laser shock peening process. The high strength steel may be specialty steel and may receive special heat treatment. Aluminum and titanium may also exhibit the ultimate tensile strengths and average surface roughnesses identified above.

In the illustrated embodiment, the band layer **140** has a band thickness **T_{B}**, and the tread rubber layer **150** has a tread thickness **T_{T}** that is greater than the band thickness **T_{B}**. In one known embodiment, the band thickness is between 0.010 inches and 0.300 inches (0.254 mm to 7.62 mm). However, other arrangements may be employed. The thicknesses of the band layer and the tread layer may be selected to provide desirable performance of the non-pneumatic tire. For example, it may be desirable to balance the bending stiffness of the band layer with the thickness of the band layer to regulate a bending moment about the neutral axis to carry a desired load at a desired deflection.

Selecting the thicknesses of the band layer and the tread rubber layer also allows the tire designer to select the location of a neutral axis of the circumferential tread. For example, the neutral axis location may be selected such that the circumferential tread would have different bending stiffness in different directions. If the neutral axis is closer to an outer diameter of the tire, the lead and trailing edge of the footprint will be harder to bend, thus increasing load carrying capacity. However, if the tire rolls over an object, it would have a lower bending stiffness in that direction thus allowing for easier envelopment and a more comfortable ride.

In selecting the materials and thicknesses of each layer, other factors may be considered. For example, it may be desirable to reduce the band layer thickness to reduce volume and weight, as well as the amount of heat generated during rotation of the tire. It may also be desirable, however, to increase band layer thickness to reduce stress in the band layer.

Additionally, it may be desirable to select the thickness and stiffness of the tread rubber layer and the band layer to regulate footprint length.

Such cylinders may have a diameter between 20-50 inches (50-130 cm). In more specific embodiments, the cylinder has a diameter between 30-40 inches (75-100 cm). In one specific embodiment, the cylinder has a diameter of 36 inches (91 cm).

As noted above, the cylinder thickness may be between 0.010 inches and 0.300 inches (0.254 mm to 7.62 mm). In more specific embodiments, the cylinder thickness is between 0.020 inches and 0.150 inches (0.50 mm to 3.8 mm). In one specific embodiment, the cylinder thickness is 0.145 inches (3.68 mm).

As noted above, the cylinder may be made of steel. Exemplary steel includes ultra high strength steel, 4340 steel, or 1080 steel. Alternatively, the cylinder may be formed of an alloy.

It has been found that a band in the form of a metal or high strength polymer cylinder yields good results. It was previously known that seamless, metal cylinders yield good results, as discussed in International Publication No. WO 2020/142665. A seamless, metal cylinder may have a consistent thickness about the entire circumference, thereby minimizing stress concentrations. By contrast, a cylinder having a seam formed by a welding process would have a different thickness at the seam, which may create stress concentrations. Despite this known problem, however, testing has shown that seamed, metal or high strength polymer cylinders may yield surprisingly good results.

Seamed, metal or high strength polymer cylinders have additional manufacturing benefits compared to seamless cylinders. It is difficult to forge a cylinder having a diameter between 20-50 inches and a thickness between 0.010 inches and 0.300 inches. Forging a cylinder with such dimensions may result in cracks, micro-cracks, or other irregularities. Therefore, in prior embodiments, a seamless cylinder with a diameter between 20-50 inches and a thickness between 0.300 inches to 1 inch was made by a rough forging process. The cylinder was then machined or lathed to a desired thickness of between 0.010 inches and 0.300 inches. The machining or lathing may be performed in multiple steps. The cylinder may also be subjected to heat treatment steps and polishing steps. Such a process may be time intensive, and may produce undesirable waste.

In another alternative prior embodiment, a seamless cylinder with a diameter between 20-50 inches and a thickness between 0.300 inches to 1 inch was made by a rough forging process. The thickness of the cylinder was then reduced by a cold forming process.

By contrast, a seamed, metal or high strength polymer cylinder may be formed from a sheet of metal or high strength polymer having a thickness between 0.010 inches and 0.300 inches. In comparison to a forged, metal cylinder, a sheet of such thickness is less likely to result in cracks, micro-cracks, or other irregularities. Thus, manufacturing a seamed, metal or high strength polymer cylinder from a thin sheet of metal or high strength polymer may be may be advantageous, because less processing is required after such a cylinder is formed, and the resulting cylinder may be comparable to, or even have fewer stress concentrations than a seamless, metal cylinder. It should be understood, however, that the sheet may have a greater thickness that is reduced during a manufacturing process. For example, the sheet may have an initial thickness between 0.300 inches to 2 inches that is reduced.

In one embodiment, a seamed, metal cylinder is formed from a flat plate stock of steel. In another embodiment, a seamed, metal cylinder is formed from a flat plate stock of other metal, such as aluminum, tin, brass, nickel, copper, titanium, or other metal or alloy, particularly a high strength alloy. In yet another embodiment, a seamed cylinder may be formed from a high strength polymer.

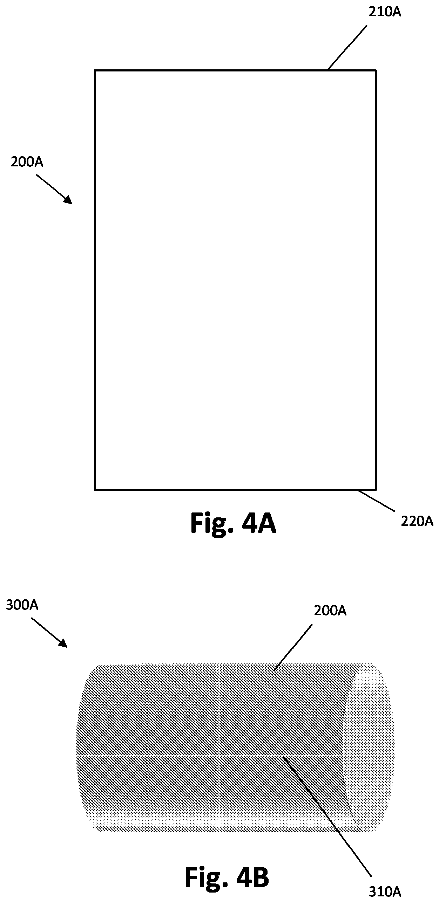

**Figure 4A** is a front plan view of one embodiment of a flat plate stock or sheet **200A** of metal or high strength polymer having a rectangular shape. In one embodiment, the sheet **200A** is formed as a single plate to specified dimensions. In an alternative embodiment, the sheet is formed as an elongated sheet that is cut down to specified dimensions. The sheet **200A** is then rolled in a longitudinal direction such that a first end or edge **210A** contacts a second end or edge **220A** to form a cylinder **300A.**

**Figure 4B** is a perspective view of the cylinder **300A.** As can be seen from this view, the first end **210A** and the second end **200A** of the rectangular sheet **200A** form a longitudinal seam **310A.** The longitudinal seam **310A** may then be welded. In one embodiment, the welded seam **310A** is fashioned with techniques that produce a joint that is of the same composition as the matrix such as friction stir welding, laser welding, electron beam welding, or induction welding techniques. The chosen process may eliminate the need for a filler material and maintain the high strength and toughness of the material of the sheet **200A.**

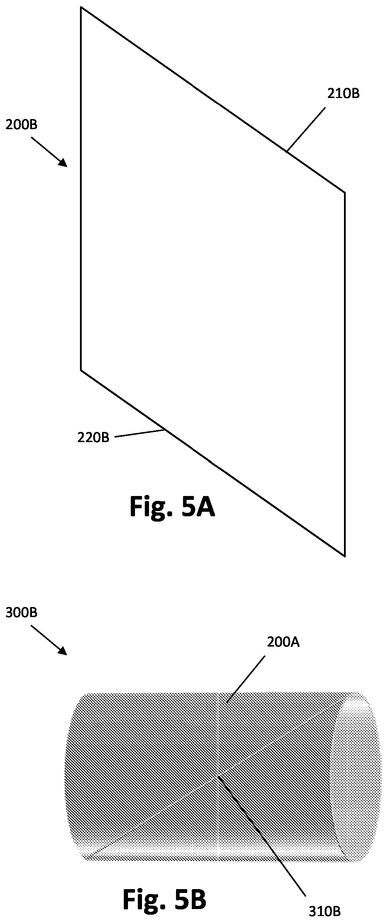

**Figure 5A** is a front plan view of an alternative embodiment of a flat plate stock or sheet **200B** of metal or high strength polymer having a parallelogram shape. In one embodiment, the sheet **200B** is formed as a single plate to specified dimensions. In an alternative embodiment, the sheet is formed as an elongated sheet that is cut down to specified dimensions. The sheet **200B** is then rolled such that a first end or edge **210B** contacts a second end or edge **220B** to form a cylinder **300B.**

**Figure 5B** is a perspective view of the cylinder **300B.** As can be seen from this view, the first end **210B** and the second end **200B** of the parallelogramshaped sheet **200B** form a diagonal seam **310B.** The diagonal seam **310B** may then be welded, using one of the welding processes discussed above for a longitudinal seam.

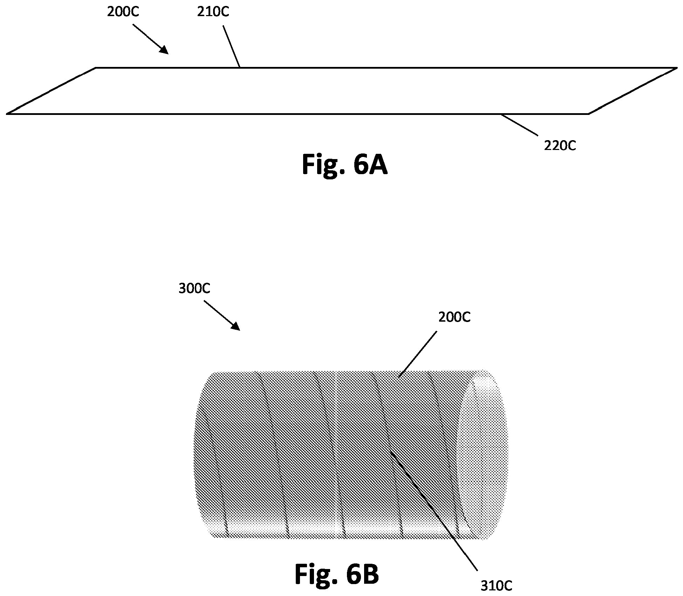

**Figure 6A** is a front plan view of another alternative embodiment of a flat plate stock or sheet **200C** of metal or high strength polymer having an elongated parallelogram shape. In one embodiment, the sheet **200C** is formed as a single plate to specified dimensions. In an alternative embodiment, the sheet is formed as an elongated sheet that is cut down to specified dimensions. The sheet **200C** is then spiraled such that a first side or edge **210C** contacts a second side or edge **220C** in a spiral formation along a resulting cylinder **300C.**

**Figure 6B** is a perspective view of the cylinder **300C.** As can be seen from this view, the first side **210C** and the second side **200C** of the elongated parallelogram form a spiral seam **310C** of the cylinder **300C.** The spiral seam **310C** may then be welded, using one of the welding processes discussed above for a longitudinal seam.

The examples shown in **Figures 4-6** are not intended to be limiting. It should be understood that other seams may be employed. For example, the seams may be non-linear, such as a curve or wave-shaped seam.

In one example, which is not according to the present invention, no postproduction processing is performed after the seam is welded. In other words, no machining, resizing, or heat-treatment is performed. In an alternative embodiment, which is according to the present invention, after the welding step, a stress relieving operation is performed to alleviate any stresses after formation of the cylinder. Specifically, a cold forming process is performed

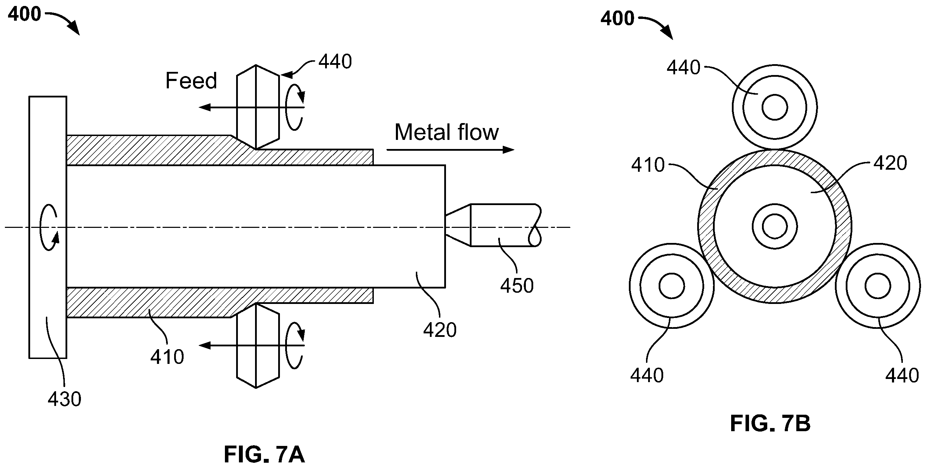

In one embodiment, the cold forming process is a reverse flow forming process, as illustrated in **Figures 7A****,B.** **Figure 7A** illustrates a cross-sectional view of a reverse flow forming system **400,** while **Figure 7B** illustrates a front view of the reverse flow forming system **400.** In this system, a seamed cylinder **410** (such as any one of the cylinders **300A, 300B, 300C** described above) is placed on a mandrel **420** having a spindle **430.** After the cylinder **410** is placed on the mandrel **420,** the spindle **430** rotates the mandrel **420** and the cylinder **410** in a first direction. A plurality of rollers **440** engage the cylinder **410** and the rollers **440** rotate in a second direction opposite the first direction. A tailstock **450** provides support for the system.

The rollers **440** then move towards the spindle. In one embodiment, the rollers **440** are spaced such that the thickness of the welded seam is reduced to the same thickness of the rest of the cylinder **410,** while the wall thickness of the cylinder **410** is not otherwise changed. In another embodiment, the rollers **440** are spaced such that the movement of the spindle reduces both the thickness of the welded seam and the wall thickness of the cylinder **410.** In this embodiment, the movement of the rollers **440** further causes the material of the cylinder to move in a direction opposite to the travel direction of the rollers **440.**

In the illustrated embodiment, three rollers are employed. In alternative embodiments, any number of rollers may be employed.

In addition to reducing the thickness of the welded seam, the cold forming process may also improve surface finish and strengthen the material. After the cold forming process, the cylinder may also be subjected to heat treatment steps and polishing steps.

In one embodiment, the rollers **440** are spaced from the mandrel **420** by a distance equal to the desired thickness of the finished cylinder. Thus, in such an embodiment, the thickness of the cylinder **410** (including the thickness of the welded seam) is reduced to the desired thickness by a single pass of the rollers **440.** In an alternative embodiment, the rollers **440** are first spaced by a distance greater than the desired thickness of the finished cylinder. In such an embodiment, after a first pass of the rollers **440,** the rollers **440** are returned to an axial starting position and the distance between the rollers **440** and the mandrel **420** is reduced. A second pass of the rollers is then performed. If the thickness of the cylinder is still greater than desired, the process can be repeated for as many passes as desired. In all embodiments, the rollers **440** may be staggered both axially and radially.

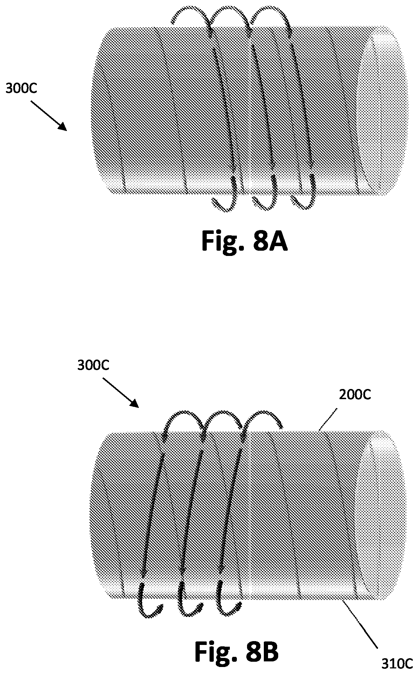

When the cylinder **410** has a diagonal weld (such as that shown in cylinder **300B**) or a spiral weld (such as that shown in cylinder 300C), the rotation direction of the rollers can vary with respect to the direction of the weld. For example, **Figure 8A** is a perspective view of the cylinder of **Figure 6B** with arrows indicating that the rollers travel in a complimentary direction of the weld. Alternatively, **Figure 8B** is a perspective view of the cylinder of **Figure 6B** with arrows indicating that the rollers travel in a direction counter to the weld.

The mechanical properties and fatigue properties of the cylinder **410** may be substantially different after the flow forming process due to the resulting microstructure. It is known that microstructure within in the material is tied directly to the mechanical and fatigue properties. By plastically deforming the material through cold working during the flow forming process, the development of an improved microstructure is projected to not only alleviate stresses at the weld line but result in improvement of mechanical and fatigue properties within the final part.

While the band layer and tread rubber layer have been described with respect to non-pneumatic tires, it should be understood that they may also be employed in pneumatic tires, such as run-flat pneumatic tires.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus and method, and illustrative examples shown and described. Accordingly, departures may be made from such details without departing from the scope of the invention as defined in the appended claims.

## Claims

1. A non-pneumatic tire (10; 100) comprising:
a lower ring (20; 110) having an axis of rotation;
an upper ring (30; 120) coaxial with the lower ring (20; 110);
support structure (40; 130) extending from the lower ring (20; 110) to the upper ring (30; 120); and
a circumferential tread (70; 150) extending about the upper ring (30; 120), the circumferential tread (70; 150) including a band layer (140) and a tread rubber layer (150) directly attached to the band layer (140),
**characterised in that**
the band layer (140) is formed by a seamed cylinder (300A; 300B; 300C; 410) constructed of a single material,
wherein the seamed cylinder (300A; 300B; 300C; 410) includes a welded joint (310A; 310B; 310C) with a thickness that has been reduced by a cold forming process.

2. The non-pneumatic tire (10; 100) of claim 1, wherein the band layer (140) is directly attached to the upper ring (30; 120).

3. The non-pneumatic tire (10; 100) of claim 1, wherein the single material of the band layer (140) is steel.

4. The non-pneumatic tire (10; 100) of claim 1, wherein the single material of the band layer (140) is a polymeric material.

5. The non-pneumatic tire (10; 100) of claim 1, wherein the single material has an ultimate tensile strength of at least 410 MPa.

6. The non-pneumatic tire (10; 100) of claim 1, wherein the seamed cylinder (300A) has a longitudinal seam (310A).

7. The non-pneumatic tire (10; 100) of claim 1, wherein the seamed cylinder (300B) has a diagonal seam (310B).

8. The non-pneumatic tire (10; 100) of claim 1, wherein the seamed cylinder (300C) has a spiral seam (310C).

9. The non-pneumatic tire (10; 100) of claim 1, wherein the single material has a surface with an average surface roughness of less than 25 microns.

10. A method of making a non-pneumatic tire (10; 100), the method comprising:
providing an assembly with a lower ring (20; 110), an upper ring (30; 120) coaxial with the lower ring (20; 110), and support structure (40; 130) extending from the lower ring (20; 110) to the upper ring (30; 120);
providing a sheet of material (200A; 200B; 200C);
forming the sheet of material (200A; 200B; 200C) into a cylinder (300A; 300B; 300C; 410), such that a first edge (210A; 210B; 210C) of the sheet of material (200A; 200B; 200C) contacts a second edge (220A; 220B; 220C) of the sheet of material (200A; 200B; 200C);
welding the first edge (210A; 210B; 210C) to the second edge (220A; 220B; 220C) to form a welded joint (310A; 310B; 310C) of a seamed cylinder (300A; 300B; 300C; 410);
cold forming the seamed cylinder (300A; 300B; 300C; 410) to reduce a thickness of the welded joint (310A; 310B; 310C);
placing the seamed cylinder (300A; 300B; 300C; 410) about the upper ring (30; 120); and
providing tread rubber (70; 150) about the seamed cylinder (300A; 300B; 300C; 410).

11. The method of claim 10, further comprising cold forming the seamed cylinder (300A; 300B; 300C; 410) to thin a wall of the seamed cylinder (300A; 300B; 300C; 410).

12. The method of claim 10, wherein the cold forming of the seamed cylinder (300A; 300B; 300C; 410) includes reverse flow forming the seamed cylinder (300A; 300B; 300C; 410).

13. The method of claim 12, wherein the reverse flow forming is performed in a direction complimentary to the welded joint (310A; 310B; 310C).

14. The method of claim 12, wherein the reverse flow forming is performed in a direction counter to the welded joint (310A; 310B; 310C).

## Patentansprüche

1. Nicht-pneumatischer Reifen (10; 100), umfassend:
einen unteren Ring (20; 110), der eine Drehachse aufweist;
einen oberen Ring (30; 120) koaxial mit dem unteren Ring (20; 110);
eine Stützstruktur (40; 130), die sich von dem untere Ring (20; 110) zu dem oberen Ring (30; 120) erstreckt; und
eine umlaufende Lauffläche (70; 150), die sich um den oberen Ring (30; 120) erstreckt, wobei die umlaufende Lauffläche (70; 150) eine Bandschicht (140) und eine Laufflächengummischicht (150), die an der Bandschicht (140) direkt befestigt ist, einschließt,
**dadurch gekennzeichnet, dass**
die Bandschicht (140) durch einen Nahtzylinder (300A; 300B; 300C; 410) geformt ist, der aus einem einzelnen Material konstruiert ist,
wobei der Nahtzylinder (300A; 300B; 300C; 410) eine Schweißverbindung (310A; 310B; 310C) mit einer Dicke einschließt, die durch einen Kaltumformungsprozess reduziert wurde.

2. Nicht-pneumatischer Reifen (10; 100) nach Anspruch 1, wobei die Bandschicht (140) an dem oberen Ring (30; 120) direkt befestigt ist.

3. Nicht-pneumatischer Reifen (10; 100) nach Anspruch 1, wobei das einzelne Material der Bandschicht (140) Stahl ist.

4. Nicht-pneumatischer Reifen (10; 100) nach Anspruch 1, wobei das einzelne Material der Bandschicht (140) ein polymeres Material ist.

5. Nicht-pneumatischer Reifen (10; 100) nach Anspruch 1, wobei das einzelne Material eine endgültige Zugfestigkeit von mindestens 410 MPa aufweist.

6. Nicht-pneumatischer Reifen (10; 100) nach Anspruch 1, wobei der Nahtzylinder (300A) eine Längsnaht (310A) aufweist.

7. Nicht-pneumatischer Reifen (10; 100) nach Anspruch 1, wobei der Nahtzylinder (300B) eine diagonale Naht (310B) aufweist.

8. Nicht-pneumatischer Reifen (10; 100) nach Anspruch 1, wobei der Nahtzylinder (300C) eine Spiralnaht (310C) aufweist.

9. Nicht-pneumatischer Reifen (10; 100) nach Anspruch 1, wobei das einzelne Material eine Oberfläche mit einer durchschnittlichen Oberflächenrauheit von weniger als 25 Mikrometer aufweist.

10. Verfahren zum Herstellen eines nicht-pneumatischen Reifens (10; 100), das Verfahren umfassend:
Bereitstellen einer Anordnung mit einem unteren Ring (20; 110), einem oberen Ring (30; 120) koaxial mit dem unteren Ring (20; 110) und einer Stützstruktur (40; 130), die sich von dem unteren Ring (20; 110) zu dem oberen Ring (30; 120) erstreckt;
Bereitstellen einer Materialplatte (200A; 200B; 200C);
Formen der Materialplatte (200A; 200B; 200C) zu einem Zylinder (300A; 300B; 300C; 410), derart, dass eine erste Kante (210A; 210B; 210C) der Materialplatte (200A; 200B; 200C) eine zweite Kante (220A; 220B; 220C) der Materialplatte (200A; 200B; 200C) berührt;
Schweißen der ersten Kante (210A; 210B; 210C) mit der zweiten Kante (220A; 220B; 220C), um eine Schweißverbindung (310A; 310B; 310C) eines Nahtzylinders (300A; 300B; 300C; 410) zu formen;
Kaltumformen des Nahtzylinders (300A; 300B; 300C; 410), um eine Dicke der Schweißverbindung (310A; 310B; 310C) zu reduzieren;
Platzieren des Nahtzylinders (300A; 300B; 300C; 410) um den oberen Ring (30; 120); und
Bereitstellen von Laufflächengummi (70; 150) um den Nahtzylinder (300A; 300B; 300C; 410).

11. Verfahren nach Anspruch 10, ferner umfassend das Kaltformen des Nahtzylinder (300A; 300B; 300C; 410), um eine Wand des Nahtzylinders (300A; 300B; 300C; 410) zu verdünnen.

12. Verfahren nach Anspruch 10, wobei das Kaltumformen des Nahtzylinders (300A; 300B; 300C; 410) ein Umkehrfließformen des Nahtzylinders (300A; 300B; 300C; 410) einschließt.

13. Verfahren nach Anspruch 12, wobei das Umkehrfließformen in einer Richtung durchgeführt wird, die komplementär zu der Schweißverbindung (310A; 310B; 310C) ist.

14. Verfahren nach Anspruch 12, wobei das Umkehrfließformen in einer Richtung entgegen der Schweißnaht (310A; 310B; 310C) durchgeführt wird.

## Revendications

1. Pneu non pneumatique (10 ; 100) comprenant :
un anneau inférieur (20 ; 110) présentant un axe de rotation ;
un anneau supérieur (30 ; 120) coaxial avec l'anneau inférieur (20 ; 110) ;
une structure de support (40 ; 130) s'étendant de l'anneau inférieur (20 ; 110) vers l'anneau supérieur (30 ; 120) ; et
une bande de roulement circonférentielle (70 ; 150) s'étendant autour de l'anneau supérieur (30 ; 120), la bande de roulement circonférentielle (70 ; 150) comportant une couche de bande (140) et une couche de caoutchouc de bande de roulement (150) directement fixée à la couche de bande (140),
**caractérisé en ce que**
la couche de bande (140) est formée par un cylindre à couture (300A ; 300B ; 300C ; 410) constitué d'un matériau unique,
dans lequel le cylindre à couture (300A ; 300B ; 300C ; 410) comporte un joint soudé (310A ; 310B ; 310C) dont une épaisseur a été réduite par un processus de formage à froid.

2. Pneu non pneumatique (10 ; 100) selon la revendication 1, dans lequel la couche de bande (140) est directement fixée à l'anneau supérieur (30 ; 120).

3. Pneu non pneumatique (10 ; 100) selon la revendication 1, dans lequel le matériau unique de la couche de bande (140) est l'acier.

4. Pneu non pneumatique (10 ; 100) selon la revendication 1, dans lequel le matériau unique de la couche de bande (140) est un matériau polymère.

5. Pneu non pneumatique (10 ; 100) selon la revendication 1, dans lequel le matériau unique présente une résistance maximale à la traction d'au moins 410 MPa.

6. Pneu non pneumatique (10 ; 100) selon la revendication 1, dans lequel le cylindre à couture (300A) présente une couture longitudinale (310A).

7. Pneu non pneumatique (10 ; 100) selon la revendication 1, dans lequel le cylindre à couture (300B) présente une couture diagonale (310B).

8. Pneu non pneumatique (10 ; 100) selon la revendication 1, dans lequel le cylindre à couture (300C) présente une couture en spirale (310C).

9. Pneu non pneumatique (10 ; 100) selon la revendication 1, dans lequel le matériau unique présente une surface avec une rugosité moyenne de surface inférieure à 25 microns.

10. Procédé de fabrication d'un pneu non pneumatique (10 ; 100), le procédé comprenant :
la fourniture d'un ensemble avec un anneau inférieur (20 ; 110), un anneau supérieur (30 ; 120) coaxial avec l'anneau inférieur (20 ; 110), et une structure de support (40 ; 130) s'étendant de l'anneau inférieur (20 ; 110) vers l'anneau supérieur (30 ; 120) ;
la fourniture d'une feuille de matériau (200A ; 200B ; 200C) ;
le formage de la feuille de matériau (200A ; 200B ; 200C) dans un cylindre (300A ; 300B ; 300C ; 410), de telle sorte qu'un premier bord (210A ; 210B ; 210C) de la feuille de matériau (200A ; 200B ; 200C) entre en contact avec un second bord (220A ; 220B ; 220C) de la feuille de matériau (200A ; 200B ; 200C) ;
le soudage du premier bord (210A ; 210B ; 210C) jusqu'au second bord (220A ; 220B ; 220C) pour former un joint soudé (310A ; 310B ; 310C) d'un cylindre soudé (300A ; 300B ; 300C ; 410) ;
le formage à froid du cylindre à couture (300A ; 300B ; 300C ; 410) pour réduire une épaisseur du joint soudé (310A ; 310B ; 310C) ;
le placement du cylindre à couture (300A ; 300B ; 300C ; 410) autour de l'anneau supérieur (30 ; 120) ; et
la fourniture du caoutchouc de bande de roulement (70 ; 150) autour du cylindre à couture (300A ; 300B ; 300C ; 410).

11. Procédé selon la revendication 10, dans lequel le formage à froid du cylindre à couture (140 ; 300B ; 300C ; 410) pour amincir une paroi du cylindre à couture (140 ; 300B ; 300C ; 410).

12. Procédé selon la revendication 10, dans lequel le formage à froid du cylindre à couture (140 ; 300B ; 300C ; 410) comporte un écoulement inverse formant le cylindre à couture (140 ; 300B ; 300C ; 410).

13. Procédé selon la revendication 12, dans lequel le fluotournage inversé est effectué dans une direction complémentaire au joint soudé (310A ; 310B ; 310C).

14. Procédé selon la revendication 12, dans lequel le fluotournage inversé est effectué dans une direction contraire au joint soudé (310A ; 310B ; 310C).
